# EUROPÄISCHE PATENTSCHRIFT

(11) **EP 1 431 636 B1**
(45) Veröffentlichungstag und Bekanntmachung des Hinweises auf die Patenterteilung: **22.06.2005**
(21) Anmeldenummer: 03028196.8
(22) Anmeldetag: 09.12.2003
(51) Int. Cl.: F16K 17/04, F16K 15/06, B01D 35/147

(54) **Ventil**
Valve
Soupape

(30) Priorität: 20.12.2002 DE 10259884
(43) Veröffentlichungstag der Anmeldung: 23.06.2004
(73) Patentinhaber: Joma-Polytec Kunststofftechnik GmbH, 72407 Bodelshausen (DE)
(72) Erfinder: Jungmann, Peter, 72414 Rangendingen (DE); Knöll, Matthias, 72574 Bad Urach (DE); Pfitzer, Friedhelm, 72414 Rangendingen (DE)
(74) Vertreter: Dreiss, Fuhlendorf, Steimle & Becker

(56) Entgegenhaltungen:
- DE-A- 19 502 020
- GB-A- 2 375 973
- US-A- 5 956 822
- US-B1- 6 177 003

## Beschreibung

Die Erfindung betrifft ein hydraulisch oder pneumatisch angesteuertes Sitzventil, insbesondere ein Überdruckventil, mit einem in einem Grundteil ausgebildeten Ventilsitz, der mit einer Dichtfläche eines Ventilkörpers zusammenwirkt, der in einem Haubenteil verschiebbar gelagert ist, wobei Grundteil und Haubenteil miteinander verbunden sind, wobei das Grundteil einen nach radial außen weisenden, zumindest abschnittsweise umlaufenden Kragen aufweist, mit dem das Sitzventil an einem weiteren Bauteil durch eine Schweißverbindung befestigbar ist.

Ein mehrteiliges Ventil ist bspw. aus der EP 0 463 289 B1 bekannt. Es weist ein Grundteil aus Aluminium sowie ein Haubenteil aus Kunststoff auf. Das Grundteil und das Haubenteil sind über eine Bördelverbindung miteinander verbunden. Hierfür weist das Grundteil aus Aluminium einen umlaufenden Bördelrand auf, der um einen Randabschnitt des Haubenteils herum gebördelt ist.

Aus der DE 201 08 856 U1 ist ein weiteres Ventil bekannt, dessen Grundteil und Haubenteil über eine Rastverbindung miteinander verbunden sind.

Die genannten Ventile können bspw. in einem Ölfiltergehäuse angeordnet sein, um ein Filterumgehungsventil zu bilden. Bei zugesetztem Ölfilter öffnet das Ventil, so dass ungefiltertes Öl ohne Filterung von der Roh- zur Reinseite des Filters gelangt. Somit ist sichergestellt, dass auch bei zugesetztem Ölfilter ein angeschlossenes Aggregat wie z.B. eine Verbrennungskraftmaschine mit Öl versorgt werden kann.

Ein weiteres Ventil ist in der DE 195 02 020 C2 offenbart. Es ist als Überdruckventil einer Ölfilteranordnung vorgesehen. Das Ventilgehäuse besteht im Wesentlichen aus einem Grundteil und einem Haubenteil. Das Grundteil ist über einen Rand mit einem Stützkörper einer Ölfilteranordnung verschweißbar.

Aus der GB 2 375 973 A ist ein Ventil bekannt geworden, bei dem ein das Ventilgehäuse mit einem Deckel verschweißt ist.

Die genannten, mehrteiligen Ventile weisen das Problem auf, das eine exakte axiale Positionierung aller Ventilgehäusebauteile nicht möglich ist. Darüber hinaus können sich bei Versagen der Verbindung zwischen den Gehäuseteilen einzelne Gehäuseteile vom Ventil lösen und am jeweiligen Einbauort oder funktionell nachgeschalteten Bereichen Schäden verursachen.

Der vorliegenden Erfindung liegt daher die Aufgabe zugrunde, die exakte Montage aller Gehäusebauteile eines gattungsgemäßen Ventils zu gewährleisten und eine Sicherung gegen das Versagen der Verbindung zwischen den Gehäuseteilen zu schaffen.

Diese Aufgabe wird erfindungsgemäß dadurch gelöst, dass das Haubenteil einen nach radial innen zurückgesetzt angeordneten, zumindest abschnittsweise umlaufenden Absatz aufweist, der zur Anlage an ein weiteres Bauteil geeignet ist.

Durch den erfindungsgemäßen Absatz kann das Haubenteil gegenüber dem weiteren Bauteil exakt positioniert werden. Somit ist die exakte Positionierung des Haubenteils trotz der notwendiger Weise mit Toleranzen behafteten Rastverbindung mit dem Grundteil des Sitzventils möglich.

Die Anordnung eines Kragens am Grundteil hat den Vorteil, dass eine zuverlässige Verbindung zwischen dem Sitzventil und einem weiteren Bauteil, beispielsweise einem Gehäuse, besonders einfach herstellbar ist. Der vorgeschlagene Kragen kann einstückig mit dem Grundteil ausgebildet sein und beispielsweise im Spritzgießverfahren zusammen mit dem Grundteil hergestellt werden. Durch die Anlage des Kragens an einem Abschnitt des Bauteils, an oder in dem das Ventil montiert werden soll, wird eine exakte geometrische Bezugsebene gebildet. Somit ist sichergestellt, dass das Ventil gegenüber einem Bauteil eine definierte Lage einnimmt und positionsgenau befestigbar ist. Auch die automatisierte Zuführung des Ventils zu einem Bauteil wird erleichtert, da das Ventil zunächst lose in das Bauteil eingesetzt werden kann und nicht gleichzeitig unter Kraftaufwand in eine Bauteilöffnung gezwängt werden muss, wie es zum Beispiel bei der DE 201 08 856 U1 der Fall ist. Vielmehr kann das Ventil zunächst exakt positioniert werden, bevor es mit dem entsprechenden Bauteil verbunden wird.

Durch die Befestigung des Ventils mit Hilfe einer Schweißverbindung ist ein besonders zuverlässiger und dauerhafter Halt des Ventils an oder in seinem Einbauort gewährleistet. Außerdem sind die prozessrelevanten Parameter bei einem Schweißvorgang leichter kontrollierbar als bei einem Einpressvorgang.

Bei Verwendung von Kunststoff für Grundteil, Haubenteil und Ventilkörper ist eine besonders einfache und preisgünstige Herstellung der einzelnen Komponenten möglich. Darüber hinaus gestaltet sich die Entsorgung und/oder das Recycling des erfindungsgemäßen Sitzventils als einfach und effektiv.

Vorteilhafter Weise sind das Grundteil und das Haubenteil sowie der Ventilkörper aus dem selben Kunststoff gebildet. Hierdurch ist gewährleistet, dass die genannten Bauelemente des Sitzventils einheitliche Eigenschaften aufweisen, was beispielsweise im Hinblick auf die Wärmeausdehnung bei Einsatz in hoch temperierten Umgebungen wichtig ist. Beispielsweise bestehen das Grundteil, das Haubenteil und der Ventilkörper aus einem hydrolyse- und ölbeständigen Polyamid. Durch Verwendung des gleichen Kunststoffs wird außerdem die Entsorgung bzw. das Recycling des Sitzventils erleichtert.

Vorteilhafterweise weist der Kragen eine Ringfläche auf. Mit dieser Ringfläche wird ein Anschlag gebildet, der mit einer entsprechenden Aufnahme bspw. in einem Gehäuse zusammenwirken kann, so dass die Einbaulage des Sitzventils exakt definiert ist. Die Ausgestaltung des Kragens als Ringfläche ist für die Ausbildung einer fluiddichten Verbindung bspw. zu einem Gehäuse besonders vorteilhaft.

In ganz besonders vorteilhafter Weise sind das Grundteil und/oder das Haubenteil im wesentlichen rotationssymmetrisch ausgebildet. Bei Verwendung eines am Grundteil befestigten Kragens, der entsprechend der Rotationssymmetrie des Grundteils als Ringfläche ausgebildet ist, kann das Sitzventil mit seinem Kragen durch Rotationsschweißen mit einem weiteren Bauteil verbunden werden. Hierdurch ist eine besonders zuverlässige und einfache Verbindung zwischen Sitzventil und beispielsweise einem Gehäuse möglich.

In Ausgestaltung der Erfindung weist der Kragen zur Realisierung der Schweißverbindung eine Verdickung auf. Der Kragen dient also nicht nur zur geometrischen Positionierung des Sitzventils, sondern auch als Materialspeicher für die Herstellung der Schweißverbindung zur Befestigung des Sitzventils an einem weiteren Bauteil. Beispielsweise ist das weitere Bauteil ebenfalls aus Kunststoff gebildet, vorzugsweise aus dem selben Kunststoff wie das Grundteil, so dass eine Verbindung zwischen dem Kragen des Grundteils und dem weiteren Bauteil durch einen Schweißvorgang ohne Einsatz von Zusatzmaterial erfolgen kann. Geeignete Schweißverfahren sind beispielsweise das Vibrations-, Rotations-, Ultraschall- oder Laserschweißverfahren.

In Ausgestaltung der Erfindung weist das Haubenteil sich parallel zur Anströmrichtung des Sitzventils erstreckende Rastabschnitte auf, wobei die der Anströmrichtung zugewandten Stirnseiten der Rastabschnitte angeschrägt sind und die der Anströmrichtung abgewandten Stirnseiten senkrecht zur Anströmrichtung orientiert sind. Durch die vorgeschlagene Ausführung der Rastabschnitte ist gewährleistet, dass der Fügevorgang zwischen Grund- und Haubenteil vereinfacht wird, da die angeschrägten Stirnseiten der Rastabschnitte ein allmähliches Aufweiten der mit den Rastabschnitten verbundenen Abschnitte des Haubenteils während des Fügevorgangs mit dem Grundteils erlauben. Durch die senkrechte Orientierung der der Anströmrichtung abgewandten Stirnseiten ist ein Hinterschnitt erzeugt, der ein Lösen des Haubenteils vom Grundteil zuverlässig verhindert.

In Ausgestaltung der Erfindung weist das Grundteil einen sich nach radial außen erstreckenden, zumindest abschnittsweise umlaufenden Steg auf, der mit den senkrecht zur Anströmrichtung orientierten Stirnseiten der Rastabschnitte des Haubenteils zusammenwirkt. Dieser Steg bildet das Gegenstück zu dem eben beschriebenen Hinterschnitt der Rastabschnitte, so dass ein Lösen des Haubenteils vom Grundteil vermieden wird.

Vorteilhafter Weise weisen das Grundteil und Haubenteil einander zugewandte Kontaktflächen auf, die im wesentlichen senkrecht zur Anströmrichtung des Sitzventils orientiert sind. Diese Kontaktflächen gewährleisten, das Grund- und Haubenteil exakt zueinander positioniert werden können, so dass die Außenabmessungen des Sitzventils nur in einem sehr engen Toleranzbereich variieren können. Durch die zueinander parallelen Kontaktflächen, die am Grundteil beispielsweise durch einen entsprechend geformten Absatz und am Haubenteil beispielsweise durch zu den Rastabschnitten benachbarte Wandabschnitte gebildet sein können, ist gewährleistet, dass Grund- und Haubenteil über einen größeren Kontaktbereich aneinander anliegen können. Dies gewährleistet, dass Grund- und Haubenteil auch bei Druckbelastungen von außen in einer durch die Kontaktflächen definierten Relativlage bleiben und ein Setzvorgang vermieden wird.

In weiterer Ausgestaltung der Erfindung weist das Grundteil Rastaufnahmen für die Rastabschnitte des Haubenteils auf, wobei die Aufnahmen aus Wandabschnitten gebildet sind, die eine bereits beschriebene Kontaktfläche umfassen, sich daran anschließende an die Form der Rastabschnitte angepasste Flankenflächen sowie eine sich daran anschließende Stegfläche eines weiter oben beschriebenen Stegs, die den senkrecht zur Anströmrichtung orientierten Stirnseiten der Rastabschnitte zugewandt ist. Durch die Kontaktfläche, die Flankenflächen und die Stegfläche wird also ein Aufnahmeraum für die Rastabschnitte des Haubenteils gebildet. Dieser Aufnahmeraum ist der Geometrie der Rastabschnitte angepasst, so dass eine besonders zuverlässige und stabile Verbindung zwischen Grund- und Haubenteil erzeugt wird. Durch die ineinander übergehenden Wandabschnitte des Aufnahmeraums werden schroffe Materialsprünge vermieden, was für die Herstellung des Grundteils im Spritzgießverfahren vorteilhaft ist.

Vorteilhafter Weise ist der Absatz zwischen einem anströmseitigen und einem abströmseitigen Haubenteilabschnitt angeordnet, wobei das Außenmaß des anströmseitigen Haubenteils größer ist als das Außenmaß des abströmseitigen Haubenteils.

Durch diese besonderes Ausführungsform wird die Ventilhaube bei Anliegen einer Fluidströmung, die auf den im Haubenteil verschiebbar gelagerten Ventilkörper wirkt, über den Absatz an einem weiteren Bauteil gesichert. Somit wird die durch den Fluidfluss erzeugte Kraft nach Übertragung auf den Ventilkörper und das Haubenteil bereits durch den Absatz in das Gehäuse abgeleitet. Eine Ableitung der Kräfte über die Rastabschnitte des Haubenteils und ggf. über die Rastaufnahmen des Grundteils sowie das Grundteil erfolgt nicht, wodurch insbesondere die Rastverbindung entlastet wird. Die Rastverbindung kann dementsprechend klein dimensioniert und ausgebildet sein. Dies hat den Vorteil, dass Material eingespart werden kann und Grund- und Haubenteil einfach und ohne hohen Kraftaufwand miteinander verrastbar sind.

Für eine zuverlässige Ableitung der entstehenden Kräfte ist es vorteilhaft, dass der Absatz zumindest abschnittsweise eine Ringfläche bildet, die senkrecht zur Anströmrichtung des Sitzventils orientiert ist. Durch diese Anordnung ist außerdem gewährleistet, dass die Lage des Haubenteils besonders exakt gegenüber einem weiteren Bauteil definiert ist.

Eine zusätzliche Weiterbildung der Erfindung sieht vor, dass der Ventilkörper in einer im Haubenteil ausgebildeten, stirnseitig offenen zylindrischen Führung geführt ist. Eine solche Führung ist im Prinzip bereits aus der eingangs genannten EP 0 463 289 B1 bekannt. Jedoch ist die dort vorgesehene zylindrische Führung geschlossen, wodurch sich im Fluid befindliche Schmutzpartikel ansammeln können. Eine solche Ansammlung wird durch offene Ausbildung der zylindrischen Führung wirksam vermieden. Dies ist insbesondere dann vorteilhaft, wenn das Sitzventil als Überdruckventil in Ölfilteranordnungen eingesetzt ist.

Vorteilhafter Weise ist die Außenkontur des Grundteils und des Haubenteils wenigstens in dem Bereich, in dem ihre Kontaktflächen aneinander liegen, zylindrisch. Durch diese Ausführung kann das Sitzventil besonders einfach in ein weiteres Bauteil, also beispielsweise in eine zylindrische Aufnahme eines Gehäuse eingesetzt werden.

Es ist weiterhin vorteilhaft, benachbart zum Ventilsitz am oder im Grundteil entlang eines Kreisumfangs angeordnete Führungselemente für den Ventilkörper vorzusehen. Durch die bspw. als Vorsprünge ausgebildeten Führungselemente kann der Ventilkörper nach Auslenkung durch einen erhöhten Fluiddruck wieder zuverlässig in seine Ruhelage zurückgebracht werden. Zur Unterstützung dieses Vorgangs können an den Vorsprüngen auf der zum Ventilkörper gewandten Seite Führungsschrägen vorgesehen sein.

Es sind mindestens drei Führungselemente erforderlich, die insgesamt einen Winkel von mehr als 180 Grad einschließen. Optimal sind 4 bis 8 Führungselemente, die gleichmäßig um den Ventilkörper herum angeordnet sind. Zur Vermeidung von Strömungsverlusten ist es vorteilhaft, dass zwischen den Führungselementen Freiräume angeordnet sind. Vorteilhafterweise erstrecken sich die Führungselemente in Strömungsrichtung um wenigstens den Betrag, der dem maximalen Hub des Ventilkörpers entspricht.

Die Erfindung betrifft auch eine Anordnung, umfassend ein Sitzventil und ein Bauteil, an dem oder in dem das Sitzventil angeordnet ist, wobei das Sitzventil und das Bauteil unlösbar miteinander verschweisst sind. Durch eine solche Anordnung kann eine vormontierte Baugruppe hergestellt werden, die einem weiteren Montagevorgang als Einheit zur Verfügung gestellt werden kann. Vorteilhafterweise findet als Sitzventil ein erfindungsgemäßes, im Vorherigen beschriebenes Sitzventil Verwendung.

Als Schweißverfahren eignen sich die bereits genannten Vibrations-, Rotations-, Ultraschall- oder Laserschweißverfahren. Durch die genannten Verfahren kann eine fluiddichte Verbindung zwischen dem Grundteil des Sitzventils und einem weiteren Bauteil hergestellt werden. Hierdurch wird vermieden, dass ein Fluid am Sitzventil vorbei strömen oder lecken kann. Es ist also gewährleistet, dass ein Fluidfluss durch die Abdichtung zwischen Ventilkörper und Ventilsitz vollständig unterbrochen werden kann. Bei eingepressten Ventilen wie bei der DE 201 08 856 U1 können insbesondere aufgrund von hohen Temperaturänderungen Undichtheiten zwischen den verpressten Teilen auftreten.

Eine zuverlässige Funktion des Sitzventils und ein Vermeiden von Leckströmen ist auch dann wichtig, wenn das mit dem Sitzventil verbundene Bauteil als Gehäuse, Mittelrohr oder Deckel insbesondere eines Ölfilters, wie er bspw. in der DE 195 02 020 C2 beschrieben ist, ausgebildet ist. Durch die Schweißverbindung kann eine solche Leckage wirksam vermieden werden.

In Ausgestaltung der Erfindung weist das Bauteil eine Aufnahme auf, in die das Sitzventil in einer Vormontageposition lose einsetzbar ist. Eine solche Aufnahme ermöglicht eine zuverlässige Definition der Relativlage zwischen Sitzventil und dem weiteren Bauteil. Durch das zumindest teilweise Ineinandersetzen von Sitzventil und Bauteil kann außerdem eine besonders kompakte Einheit erzeugt werden.

Es ist vorteilhaft, dass die Aufnahme einen Anlageabschnitt zur Anlage des weiter oben beschriebenen Kragens des Sitzventils aufweist. Dieser Anlageabschnitt stellt also das Gegenstück zu dem an dem Grundteil des Sitzventils angeordneten Kragen dar. Bei der Vormontage des Ventils liegt der Kragen zunächst lose auf dem Anlageabschnitt auf, bevor der Kragen und der Anlageabschnitt miteinander verschweißt werden. Hieraus ergibt sich, dass der Kragen auch weitgehend eben ausgeführt werden kann und ein Materialüberschuss (bspw. in Form einer Verdickung) zur Herstellung einer Schweißverbindung zwischen Grundteil und beispielsweise einem Gehäuse auch auf dem Anlageabschnitt des Gehäuses vorgesehen sein kann.

Es ist außerdem vorteilhaft, dass die Aufnahme eine Stufe aufweist, die mit dem am Haubenteil vorgesehenen Absatz zusammenwirkt. Hierdurch ist die zuverlässige Positionierung des Haubenteils im Gehäuse gewährleistet.

Es ist vorteilhaft, dass der Anlageabschnitt und die Stufe zur Anströmrichtung des Sitzventils senkrechte Flächen aufweisen, die parallel zu den Kontaktflächen des Grundteils und des Haubenteils des Sitzventils angeordnet sind. Durch diese Ausführung können in den Absatz des Haubenteils eingeleitete Kräfte über die Kontaktfläche des Haubenteils auf die Kontaktfläche des Grundteils und weiter auf den Anlageabschnitt eines Gehäuses übertragen werden. Durch die zueinander parallelen Flächen, die alle senkrecht zur Anströmrichtung des Sitzventils angeordnet sind, kann der Kraftfluss besonders effektiv abgeleitet werden.

Ganz besonders vorteilhaft ist es, wenn der Abstand zwischen den zur Anströmrichtung des Sitzventils senkrechten Flächen des Anlageabschnitts und der Stufe wenigstens geringfügig kleiner ist als der Abstand zwischen der der Anströmrichtung des Sitzventils zugewandten Fläche des Kragens des Grundteils und dem Absatz des Haubenteils. Hierdurch wird erreicht, dass die zwischen dem Absatz des Haubenteils und dem Kragen des Grundteils angeordnete Rastverbindung entlastet werden kann. Dadurch, dass der Abstand zwischen dem Anlageabschnitt und der Stufe in der Aufnahme des das Sitzventil aufnehmenden Bauteils geringfügig kleiner ist, wird das Sitzventil insgesamt und insbesondere in dem Bereich zwischen Kragen und Absatz, in dem die Rastverbindung angeordnet ist, unter Vorspannung gesetzt, wodurch die bei Anliegen einer Fluidströmung unter Zug belastete Rastverbindung entlastet wird.

Es kann auch vorteilhaft sein, wenn der Abstand zwischen den zur Anströmrichtung des Sitzventils senkrechten Flächen des Anlageabschnitts und der Stufe wenigstens geringfügig größer ist als der Abstand zwischen der der Anströmrichtung des Sitzventils zugewandten Fläche des Kragens des Grundteils und dem Absatz des Haubenteils. Solange die Rastverbindung zwischen dem Absatz des Haubenteils und dem Kragen des Grundteils intakt ist, werden Grund- und Haubenteil über diese Rastverbindung zusammengehalten. Sollte die Rastverbindung jedoch einmal versagen, ist das Grundteil weiter am Anlageabschnitt des Einbauorts fixiert, während sich das Haubenteil mit seinem Absatz an der im Einbauort vorgesehenen Stufe abstützen kann. Somit bleibt die volle Funktionsfähigkeit des Ventils auch bei Versagen der Rastverbindung erhalten.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

Es zeigen:
- Figur 1: eine Seitenansicht eines erfindungsgemäßen Sitzventils im Querschnitt;
- Figur 2: eine Seitenansicht eines in einer Ölfilteranordnung eingebauten Sitzventils im Querschnitt und
- Figur 3: eine Seitenansicht eines weiteren erfindungsgemäßen Sitzventils im Querschnitt.

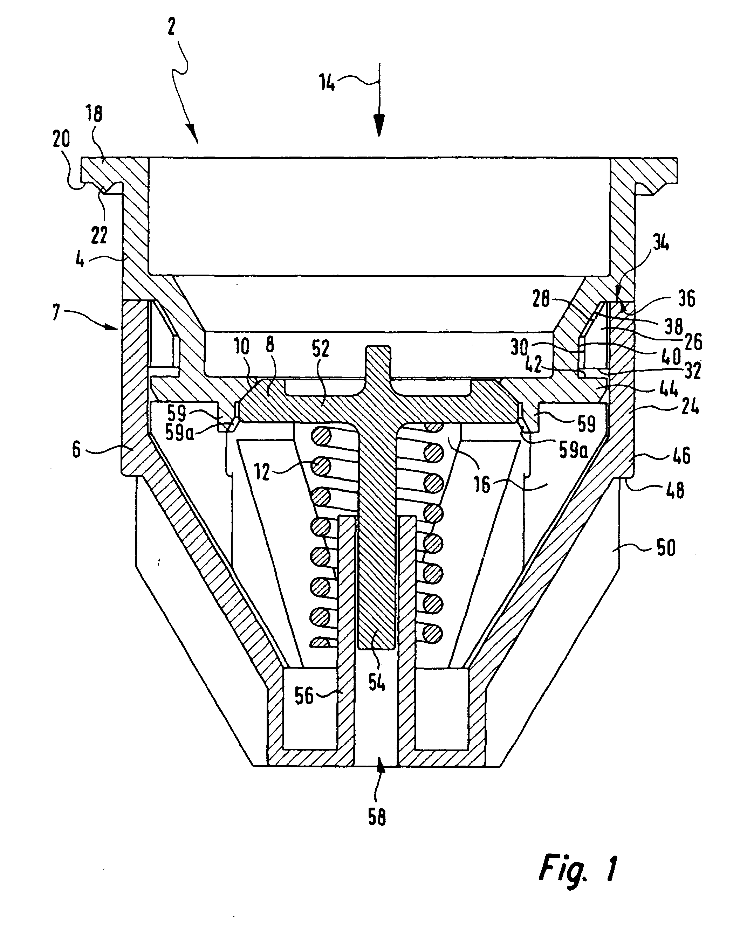

Gemäß Figur 1 ist ein Sitzventil insgesamt mit dem Bezugszeichen 2 bezeichnet. Das Sitzventil 2 besteht im wesentlichen aus einem in Figur 1 oben dargestellten Grundteil 4 und einem in Figur 1 unten dargestellten Haubenteil 6. Das Grundteil 4 und das Haubenteil 6 sind über eine Rastverbindung 7 miteinander verbunden, die weiter unten noch näher beschrieben wird.

In dem Haubenteil 6 ist ein Ventilkörper 8 verschiebbar gelagert, der mit einem im Grundteil 4 ausgebildeten Ventilsitz 10 zusammenwirkt. Der Ventilkörper 8 wird mit Hilfe eines sich am Haubenteil 6 abstützenden Federelements 12 in der in Figur 1 dargestellten Lage gehalten. Bei Anströmung gemäß Anströmungsrichtung 14 und Überwindung der durch das Federelement 12 erzeugten Haltekraft kann der Ventilkörper 8 in Bildrichtung nach unten vom Ventilsitz 10 wegbewegt werden und anströmendes Fluid durch im Haubenteil 6 vorgesehe Abströmöffnungen 16 entweichen.

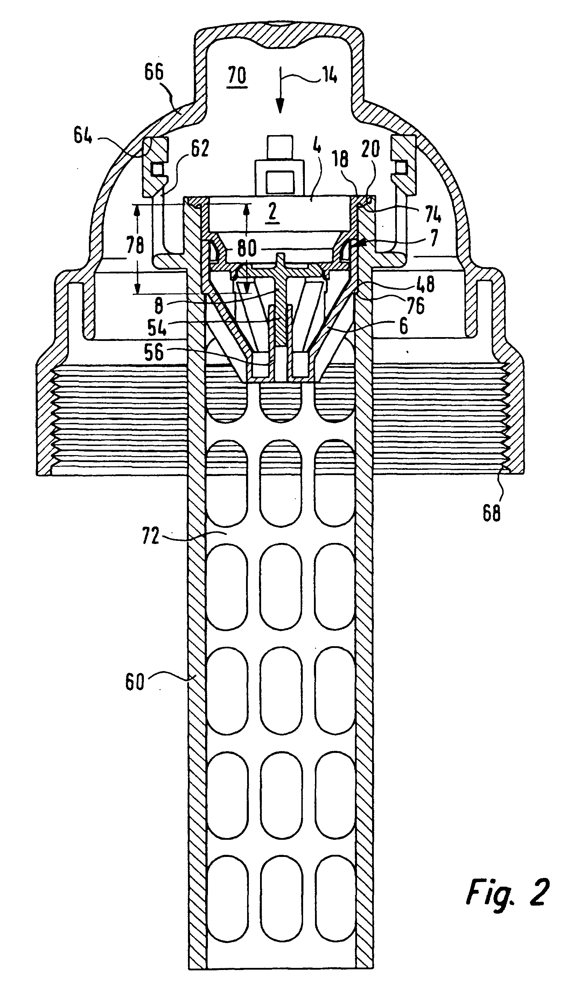

Das Grundteil 4 des Sitzventils 2 weist an seiner der Anströmrichtung 14 zugewandten Stirnseite einen Kragen 18 auf, der ringförmig ausgebildet ist und auf der der Anströmrichtung 14 abgewandten Seite eine Kragenfläche 20 aufweist, auf der eine ebenfalls umlaufende Verdickung 22 vorgesehen ist. Die Kragenfläche 20 dient als Anschlagfläche für ein mit Bezug auf Figur 2 beschriebenes Bauteil, wobei die Verdickung 22 als Materialspeicher zur Herstellung einer Schweißverbindung dient.

Im folgenden wird die zwischen dem Grundteil 4 und dem Haubenteil 6 ausgebildete Rastverbindung 7 detaillierter beschrieben. Das Haubenteil 6 weist auf seiner dem Grundteil 4 zugewandten Seite Rastarme 24 auf, an denen radial innen Rastabschnitte 26 vorgesehen sind. Die Rastabschnitte 26 weisen auf der der Anströmrichtung 14 zugewandten Seite angeschrägte Stirnflächen 28 auf, an die sich parallel zur Anströmrichtung 14 erstreckenden Seitenflächen 30 anschließen. An die Seitenflächen 30 schließen sich senkrecht zur Anströmrichtung 14 orientierte Stirnflächen 32 an.

Die Rastarme 24 weisen auf der zum Grundteil 4 zugewandten Stirnseite eine Kontaktfläche 34 auf, die im wesentlichen senkrecht zur Anströmrichtung 14 orientiert sind. Die Kontaktflächen 34 sind planparallel zu Kontaktflächen 36 ausgerichtet, die am Grundteil 4 vorgesehen sind.

An die Kontaktfläche 36 des Grundteils 4 schließt sich eine erste, schräge Flankenfläche 38 und eine zweite, parallel zur Anströmrichtung 14 orientierte Flankenfläche 40 an. An die Flankenfläche 40 schließt sich wiederum eine senkrecht zur Anströmrichtung 14 orientierte Stegfläche 42 an, die durch einen Steg 44 gebildet ist, der auf in Anströmrichtung gesehen gleicher Höhe wie der Ventilsitz 10 angeordnet ist. Die Kontaktfläche 36, die Flankenflächen 38 und 40 sowie die Stegfläche 42 bilden einen Aufnahmeraum für die Rastabschnitte 26 an den Rastarmen 24 des Haubenteils 6.

Durch die angeschrägte Stirnfläche 28 kann der Rastarm bei der Montage des Haubenteils 6 auf dem Grundteil 4 allmählich nach radial außen weggedrückt werden, bis die senkrecht zur Anströmrichtung 14 orientierte Stirnfläche 32 des Rastabschnitts 26 hinter der Stegfläche 42 des Stegs 44 zum Eingriff kommt. Durch die beschriebene Konstruktion ist eine einfache Montage des Haubenteils 6 am Grundteil 4 gewährleistet. Ferner ist durch die senkrechte Orientierung der Stirnfläche 32 und der Stegfläche 42 gewährleistet, dass das Haubenteil 6 nicht wieder vom Grundteil 4 lösbar ist.

Die Rastarme 24 des Haubenteils 6 bilden einen anströmseitigen Haubenteilabschnitt 46, der durch einen nach radial innen zurückgesetzt angeordneten Absatz 48 begrenzt ist. An den Absatz 48 schließt sich in Strömungsrichtung gesehen der abströmseitige Haubenteilabschnitt 50, der ein kleineres Außenmaß aufweist als der anströmseitige Haubenteilabschnitt 46. Der Absatz 48 dient zur Anlage an eine in einem weiteren Bauteil vorgesehene Stufe, was mit Bezug auf Figur 2 näher erläutert werden wird.

Der Ventilkörper 8 weist im wesentlichen einen Ventilteller 52 auf, dessen Rand zur Anströmrichtung 14 hin einen kegelförmigen Abschnitt aufweist, der mit einem entsprechend ausgebildeten Kegelabschnitt des Ventilsitzes 10 im Grundteil 4 zusammenwirkt. Der Ventilkörper 8 weist auf seiner der Anströmrichtung 14 abgewandten Seite einen zentral angeordneten, kolbenartigen Fortsatz 54 auf. Der Fortsatz 54 greift in eine im Haubenteil 6 vorgesehene zylindrische Führung 56, die auf der abströmseitigen Stirnseite eine Öffnung 58 aufweist. Durch diese Öffnung kann vermieden werden, dass sich Schmutzpartikel in der Führung 56 des Fortsatzes 54 ansammeln können.

Benachbart zum Ventilteller 52 sind entlang eines Kreisumfangs als Vorsprünge ausgebildete Führungselemente 59 für den Ventilteller 52 vorgesehen. Von den insgesamt sechs Führungselementen 59 sind in Figur 1 zwei Elemente im Schnitt dargestellt. Sie weisen auf der dem Ventilteller 52 zugewandten Seite Führungsschrägen 59a auf.

Gemäß Figur 2 ist das Sitzventil 2 in einer möglichen Einbaulage dargestellt. Das Sitzventil 2 ist in einem Bauteil in Form eines Mittelrohrs 60 einer Ölfilteranordnung montiert, wobei das Mittelrohr 60 über Rastarme 62 in Rastaufnahmen 64 befestigt ist, die an einem Deckel 66 vorgesehen sind. Die Einheit aus Deckel 66, Mittelrohr 60 und Sitzventil 2 kann über ein im Deckel 66 vorgesehenes Schraubgewinde 68 in ein nicht dargestelltes Ölfiltergehäuse eingesetzt und dort befestigt werden. Das Sitzventil 2 trennt in der in Figur 2 dargestellten Lage einen deckelseitigen Hochdruckraum 70 und einen im Inneren des Mittelrohrs 60 angeordneten Niederdruckraum 72. Das Sitzventil 2 ist über den Kragen 18 des Grundteils 4 an einem Anlageabschnitt 74 fixiert, der auf der dem Hochdruckraum 70 zugewandten Stirnseite des Mittelrohrs 60 vorgesehen ist. Das Sitzventil 2 ist über den Kragen 18 und über die in Figur 1 detailierter dargestellter Verdickung 22 mit dem Anlageabschnitt 74 des Mittelrohrs 60 verschweißt. Da das Sitzventil 2 sowie das Mittelrohr 60 im wesentlichen rotationssymmetrisch ausgebildet sind, können das Sitzventil 2 und das Mittelrohr 60 über ein Rotationsschweißverfahren miteinander verbunden werden.

Das Mittelrohr 60 weist vom Anlageabschnitt 74 in Strömungsrichtung 14 gesehen eine Stufe 76 auf, an der der Absatz 48 des Haubenteils 6 zur Anlage kommt. Durch die Stufe 76 ist die Position des Haubenteils 6 des Sitzventils 2 innerhalb des Mittelrohrs 60 exakt definiert. Der Abstand 78 zwischen der dem Anlageabschnitt 74 und der Stufe 76 ist geringfügig kleiner als der Abstand 80 zwischen der Kragenfläche 20 des Kragens 18 und dem Absatz 48 der Ventilhaube 6. Hierdurch wird die Anordnung aus Grundteil 4 und Haubenteil 6 unter eine Vorspannung gesetzt, die die Rastverbindung 7 zwischen Grundteil 4 und Haubenteil 6 entlastet.

Bei Anströmung des Sitzventils 2 gemäß Anströmungsrichtung 14 kann der Ventilkörper 8 in Strömungsrichtung verschoben werden, so dass der Fortsatz 54 weiter in die zylindrische Führung 56 im Haubenteil 6 eintaucht. Der Ventilkörper wird dabei von einem (nur in Figur 1 dargestellten) Federelement 12 abgestützt. Das Federelement 12 wiederum stützt sich am Haubenteil 6 ab, das die durch die Strömung entstehenden Kräfte über den Absatz 48 in das Mittelrohr 60 ableiten kann. Eine Ableitung von Kräften über das Haubenteil 6, die Rastverbindung 7 und über das Grundteil 4 und über den Kragen 18 in das Mittelrohr 60 findet nicht statt. Dies hat eine Entlastung der Rastverbindung 7 zur Folge und trägt zur hohen Funktionssicherheit des erfindungsgemäßen Sitzventils 2 bei.

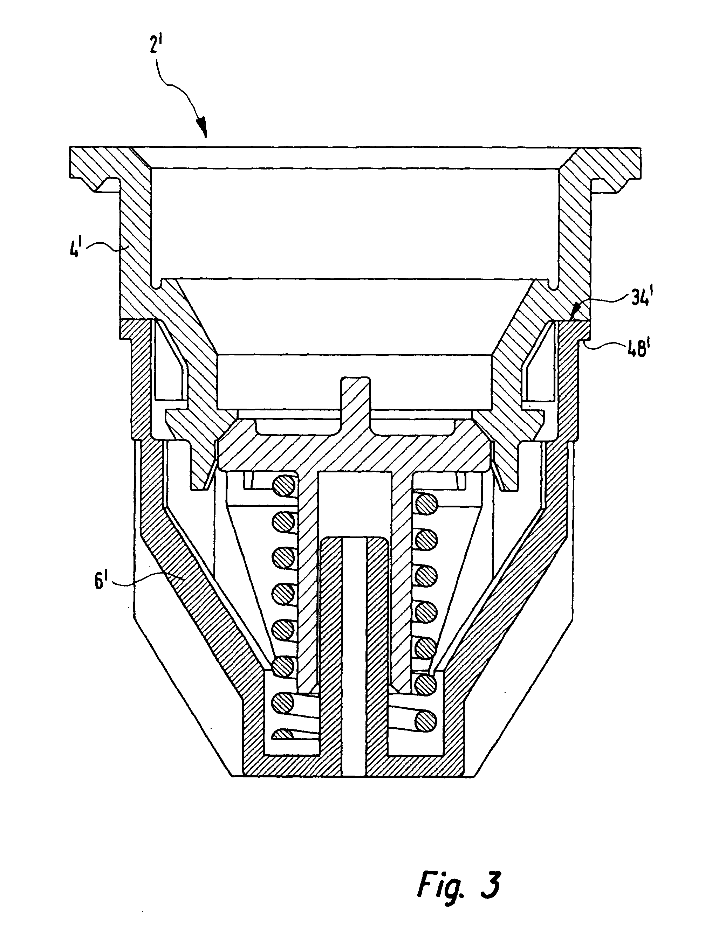

Das in Figur 3 dargestellte Sitzventil 2' weist ein Grundteil 4' und ein Haubenteil 6' auf. Das Sitzventil 2' unterscheidet sich von dem in Figur 1 dargestellten Sitzventil 2 dahingehend, als dass der Abstand zwischen einer Kontaktfläche 34' und einem Absatz 48' relativ klein ist; der Abstand entspricht im Ausführungsbeispiel in etwa der Stärke der sich in Strömungsrichtung erstreckenden Wandabschnitte des Haubenteils 6'. Dies hat den Vorteil, dass ein Bauteil zur Aufnahme des Sitzventils 2' zur Ausbildung einer Stufe zur Anlage an den Absatz 48' eine vergleichsweise flache Bohrung aufweisen kann (vgl. Abstand 78 zwischen dem Anlageabschnitt 74 und der Stufe 76 gemäß Figur 2).

## Patentansprüche

1. Hydraulisch oder pneumatisch angesteuertes Sitzventil (2), mit einem in einem Grundteil (4) ausgebildeten Ventilsitz (10), der mit der Dichtfläche eines Ventilkörpers (8) zusammenwirkt, der in einem Haubenteil (6) verschiebbar gelagert ist, wobei Grundteil (4) und Haubenteil (6) miteinander verbunden sind, wobei das Grundteil (4) einen nach radial außen weisenden, zumindest abschnittsweise umlaufenden Kragen (18) aufweist, mit dem das Sitzventil (2) an einem weiteren Bauteil (60) durch eine Schweißverbindung befestigbar ist, **dadurch gekennzeichnet, dass** das Haubenteil (6) einen nach radial innen zurückgesetzt angeordneten, zumindest abschnittsweise umlaufenden Absatz (48) aufweist, der zur Anlage an das weitere Bauteil (60) geeignet ist.

2. Sitzventil (2) nach Anspruch 1, **dadurch gekennzeichnet, dass** der Kragen (18) eine Ringfläche (20) aufweist.

3. Sitzventil (2) nach einem der Ansprüche 1 oder 2, **dadurch gekennzeichnet, dass** der Kragen (18) derart ausgestaltet ist, dass er in einer Vormontageposition lose in eine Aufnahme des Bauteils (60) einsetzbar ist.

4. Sitzventil (2) nach einem der vorhergehenden Ansprüche, **dadurch gekennzeichnet, dass** der Kragen (18) zur Realisierung der Schweißverbindung eine Verdickung (22) aufweist.

5. Sitzventil (2) nach einem der vorhergehenden Ansprüche, **dadurch gekennzeichnet, dass** das Grundteil (4) und/oder das Haubenteil (6) im Wesentlichen rotationssymmetrisch ausgebildet sind.

6. Sitzventil (2) nach einem der vorhergehenden Ansprüche, **dadurch gekennzeichnet, dass** die Schweißverbindung durch Vibrations-, Rotations-, Ultraschall- oder Laserschweißverfahren hergestellt ist.

7. Sitzventil (2) nach einem der vorhergehenden Ansprüche, **dadurch gekennzeichnet, dass** das Haubenteil (6) sich parallel zur Anströmrichtung des Sitzventils erstreckende Rastabschnitte (26) aufweist, wobei die der Anströmrichtung (14) zugewandten Stirnseiten (28) der Rastabschnitte (26) angeschrägt sind und die der Anströmrichtung (14) abgewandten Stirnseiten (32) senkrecht zur Anströmrichtung (14) orientiert sind.

8. Sitzventil (2) nach Anspruch 7, **dadurch gekennzeichnet, dass** das Grundteil (4) einen sich nach radial außen erstreckenden, zumindest abschnittsweise umlaufenden Steg (44) aufweist, der mit den senkrecht zur Anströmrichtung (14) orientierten Stirnseiten (32) der Rastabschnitte (26) des Haubenteils (6) zusammenwirkt.

9. Sitzventil (2) nach einem der vorhergehenden Ansprüche, **dadurch gekennzeichnet, dass** das Grundteil (4) und das Haubenteil (6) einander zugewandte Kontaktflächen (36, 34) aufweisen, die im Wesentlichen senkrecht zur Anströmrichtung (14) des Sitzventils (2) orientiert sind.

10. Sitzventil (2) nach Ansprüchen 7 bis 9, **dadurch gekennzeichnet, dass** das Grundteil (4) Rastaufnahmen für die Rastabschnitte (26) des Haubenteils (6) aufweist, wobei die Aufnahmen aus Wandabschnitten gebildet sind, die die Kontaktfläche (36) umfassen, sich daran anschließende, an die Form der Rastabschnitte angepasste Flankenflächen (38, 40) sowie eine sich daran anschließende Stegfläche (42) des Stegs (44), die den senkrecht zur Anströmrichtung orientierten Stirnseiten (32) der Rastabschnitte (26) zugewandt ist.

11. Sitzventil (2) nach einem der vorhergehenden Ansprüche, **dadurch gekennzeichnet, dass** der Absatz (48) zwischen einem anströmseitigen (46) und einem abströmseitigen Haubenteilabschnitt (50) angeordnet ist und dass das Außenmaß des anströmseitigen Haubenteilabschnitts (46) größer ist als das Außenmaß des abströmseitigen Haubenteilabschnitts (50).

12. Sitzventil (2) nach einem der vorhergehenden Ansprüche, **dadurch gekennzeichnet, dass** der Absatz (48) zumindest abschnittsweise eine Ringfläche bildet, die senkrecht zur Anströmrichtung (14) des Sitzventils (2) orientiert ist.

13. Sitzventil (2) nach einem der vorhergehenden Ansprüche, **dadurch gekennzeichnet, dass** der Ventilkörper (8) in einer im Haubenteil (6) ausgebildeten, stirnseitig offenen (58) zylindrischen Führung (56) geführt ist.

14. Sitzventil (2) nach Anspruch 9, **dadurch gekennzeichnet, dass** die Außenkontur des Grundteils (4) und des Haubenteils (6) wenigstens in dem Bereich, in dem die Kontaktflächen (36, 34) aneinander liegen, zylindrisch ist.

15. Sitzventil (2) nach einem der vorhergehenden Ansprüche, **dadurch gekennzeichnet, dass** benachbart zum Ventilsitz (10) am oder im Grundteil (4) entlang eines Kreisumfangs angeordnete Führungselemente (59) für den Ventilkörper (8) vorgesehen sind.

16. Anordnung, umfassend ein Sitzventil (2) nach einem der vorhergehenden Ansprüche, und ein Bauteil (60), an dem oder in dem das Sitzventil angeordnet ist, wobei das Sitzventil (2) und das Bauteil (60) unlösbar miteinander verschweisst sind.

17. Anordnung nach Anspruch 16, **dadurch gekennzeichnet, dass** das Bauteil ein Gehäuse, Mittelrohr (60) oder Deckel insbesondere eines Ölfilters ist.

18. Anordnung nach einem der Ansprüche 16 oder 17, **dadurch gekennzeichnet, dass** das Bauteil (60) eine Aufnahme aufweist, in die das Sitzventil (2) in einer Vormontageposition lose einsetzbar ist.

19. Anordnung nach Anspruch 18, **dadurch gekennzeichnet, dass** die Aufnahme einen Anlageabschnitt (74) zur Anlage des Kragens (18) des Sitzventils (2) aufweist.

20. Anordnung nach Anspruch 18 oder 19, **dadurch gekennzeichnet, dass** die Aufnahme eine Stufe (76) aufweist, die mit dem Absatz (48) des Sitzventils (2) zusammenwirkt.

21. Anordnung nach Ansprüchen 19 und 20, **dadurch gekennzeichnet, dass** der Anlageabschnitt (74) und die Stufe (76) zur Anströmrichtung (14) des Sitzventils (2) senkrechte Flächen aufweisen, die parallel zu den Kontaktflächen (36, 34) des Grundteils (4) und des Haubenteils (6) des Sitzventils (2) angeordnet sind.

22. Anordnung nach Anspruch 21, **dadurch gekennzeichnet, dass** der Abstand (78) zwischen den zur Anströmrichtung (14) des Sitzventils (2) senkrechten Flächen des Anlageabschnitts (74) und der Stufe (76) geringfügig kleiner ist als der Abstand (80) zwischen der der Anströmrichtung (14) des Sitzventils (2) zugewandten Fläche (20) des Kragens (18) und dem Absatz (48) des Sitzventils (2).

23. Anordnung nach Anspruch 22, **dadurch gekennzeichnet, dass** der Abstand (78) zwischen den zur Anströmrichtung (14) des Sitzventils (2) senkrechten Flächen des Anlageabschnitts (74) und der Stufe (76) geringfügig größer ist als der Abstand (80) zwischen der der Anströmrichtung (14) des Sitzventils (2) zugewandten Fläche (20) des Kragens (18) und dem Absatz (48) des Sitzventils (2).

## Claims

1. Hydraulically or pneumatically driven seat valve (2), with a valve seat (10) formed in a base section (4), which co-operates with the sealing surface of a valve body that is movably mounted in a cover portion (6), wherein the base section (4) and cover portion (6) are connected to each other, and wherein the base section (4) exhibits a radially outwardly protruding collar (18) that rotates at least in sections, by means of which the seat valve (2) can be fastened to a further component (60) by a welded joint, **characterised in that** the cover portion (6) exhibits a shoulder (48) which is recessed radially inwards and rotates at least in sections and which is suitable for attachment to the additional component (60).

2. Seat valve (2) according to claim 1, **characterised in that** the collar (18) exhibits a ring surface (20).

3. Seat valve (2) according to any one of claims 1 or 2, **characterised in that** the collar (18) is shaped in such a manner that it can be loosely inserted into a receiver of the component (60) when in a pre-assembly position.

4. Seat valve (2) according to any one of the preceding claims, **characterised in that** the collar (18) exhibits an enlarged section (22) in order to facilitate the welded connection.

5. Seat valve (2) according to any one of the preceding claims, **characterised in that** the base section (4) and/or the cover portion (6) are shaped so as to be substantially symmetrical in the axial sense.

6. Seat valve (2) according to any one of the preceding claims, **characterised in that** the welded joint is produced by vibration welding, rotary friction welding, ultrasonic welding or laser welding techniques.

7. Seat valve (2) according to any one of the preceding claims, **characterised in that** the cover portion (6) exhibits stop sections (26) that run parallel to the direction of flow of the seat valve, whereby the front ends (28) of the stop sections (26), which are facing the direction of flow, (14), are bevelled and the front ends (32) turned away from the direction of flow (14) are orientated perpendicularly with respect to the direction of flow (14).

8. Seat valve (2) according to claim 7, **characterised in that** the base section (4) exhibits a bar (44) which protrudes radially outwards and rotates at least in sections and engages with the front ends (32) of the stop sections (26) of the cover portion (6), which are orientated perpendicularly with respect to the direction of flow (14).

9. Seat valve (2) according to any one of the preceding claims, **characterised in that** the base section (4) and the cover portion (6) exhibit contact surfaces (36, 34) which are turned towards each other and are orientated substantially perpendicularly with respect to the direction of flow (14) of the seat valve (2).

10. Seat valve (2) according to claims 7 to 9, **characterised in that** the base section (4) exhibits stop notches for the stop sections (26) of the cover portion (6), whereby the notches comprise wall sections which embrace the contact surface (36), the connected flank surfaces (38, 40) that are adapted to the shape of the stop sections, as well as a connected nose-piece surface (42) of the bar (44), which faces the front ends (32) of the stop sections (26) that are orientated perpendicularly with respect to the direction of flow.

11. Seat valve (2) according to any one of the preceding claims, **characterised in that** the shoulder (48) is located between a cover portion (46) on the inflow side and a cover portion (50) on the flow-off side and that the external dimension of the cover portion (46) on the inflow side is greater than the external dimension of the cover portion (50) on the flow-off side.

12. Seat valve (2) according to any one of the preceding claims, **characterised in that** the shoulder (48) constitutes at least in part an annular surface that is orientated perpendicularly with respect to the inflow direction (14) of the seat valve (2).

13. Seat valve (2) according to any one of the preceding claims, **characterised in that** the valve body (8) passes into a cylindrical guide (56) which is open at the front end (58) and is formed in the cover portion (6).

14. Seat valve (2) according to claim 9, **characterised in that** the external contour of the base section (4) and of the cover portion (6) is cylindrical at least in the region in which the contact surfaces (36, 34) adjoin each other.

15. Seat valve (2) according to any one of the preceding claims, **characterised in that** guide elements (59), which are circumferentially positioned adjacent to the valve seat (10) on or in the base section (4), are provided for the valve body (8).

16. Assembly, consisting of a seat valve (2) according to any one of the preceding claims, and a component (60) on which or in which the seat valve is located, wherein the seat valve (2) and the component (60) are non-detachably welded together.

17. Assembly according to claim 16, **characterised in that** the component is a casing, a centre tube (60) or a cap, particularly for an oil filter.

18. Assembly according to claims 16 or 17, **characterised in that** the component (60) exhibits a receiver into which the seat valve (2) can be loosely inserted when in the pre-assembly position.

19. Assembly according to claim 18, **characterised in that** the receiver exhibits a locating member (74) for locating the collar (18) of the seat valve (2).

20. Assembly according to claim 18 or 19, **characterised in that** the receiver has a step (76) which engages with the shoulder (48) of the seat valve (2).

21. Assembly according to claims 19 and 20, **characterised in that** the retaining member (74) and the step (76) exhibit surfaces that are perpendicular with respect to the inflow direction (14) of the seat valve (2), which are positioned parallel to the contact surfaces (36, 34) of the base section (4) and the cover portion (6) of the seat valve (2).

22. Assembly in accordance with claim 21, **characterised in that** the spacing (78) between the surfaces of the retaining member (74), which are perpendicular to the inflow direction (14) of the seat valve (2), and the step (76), is slightly smaller than the spacing (80) between the surface (20) of the collar (18) facing the inflow direction (14) of the seat valve (2) and the shoulder (48) of the seat valve (2).

23. Assembly according to claim 22, **characterised in that** the spacing (78) between the surfaces of the retaining member (74), which are perpendicular to the inflow direction (14) of the seat valve (2), and the step (76), is slightly larger than the spacing (80) between the surface (20) of the collar (18) facing the inflow direction (14) of the seat valve (2) and the shoulder (48) of the seat valve (2).

## Revendications

1. Soupape à siège (2) à commande hydraulique ou pneumatique comportant un siège de soupape (10) formé dans une partie de base (4) et qui interagit avec la surface d'étanchéité d'un corps de soupape (8), qui est monté de façon mobile dans une partie chapeau (6), la partie de base (4) et la partie chapeau (6) étant raccordées l'une à l'autre, la partie de base (4) présentant un collet (18) orienté radialement vers l'extérieur, au moins partiellement circulaire, auquel le siège de soupape (8) peut être fixé au niveau d'un autre élément (60) par un assemblage par soudage, **caractérisée en ce que** la partie chapeau (6) présente un décrochement (48) au moins partiellement circulaire, disposé pour revenir radialement vers l'intérieur, approprié pour le montage sur l'autre élément (60).

2. Soupape à siège (2) selon la revendication 1, **caractérisée en ce que** le collet (18) présente une surface annulaire.

3. Soupape à siège (2) selon une des revendications 1 ou 2, **caractérisée en ce que** le collet (18) est conçu de façon à pouvoir être mis en place en position lâche de pré-montage dans un logement du composant (60).

4. Soupape à siège (2) selon l'une des revendications précédentes, **caractérisée en ce que** le collet (18) présente une surépaisseur (22) pour la réalisation de l'assemblage par soudage.

5. Soupape à siège (2) selon l'une des revendications précédentes, **caractérisée en ce que** la partie de base (4) et/ou la partie chapeau (6) sont conçues pour être sensiblement symétriques en rotation.

6. Soupape à siège (2) selon l'une des revendications précédentes, **caractérisée en ce que** l'assemblage par soudage est réalisé par un procédé de soudage par vibration, par rotation, aux ultrasons ou au laser.

7. Soupape à siège (2) selon l'une des revendications précédentes, **caractérisée en ce que** la partie chapeau (6) présente un segment d'encliquetage (26) s'étendant parallèlement au sens d'écoulement d'entrée de la soupape à siège, les côtés avant (28) du segment d'engrènement (26) tournés vers le sens de l'écoulement d'entrée (14) étant chanfreinés, et les côtés avant (32) opposés au sens de l'écoulement d'entrée (14) étant orientés perpendiculairement au sens de l'écoulement d'entrée (14).

8. Soupape à siège (2) selon la revendication 7, **caractérisée en ce que** la partie de base (4) présente une bride (44) s'étendant radialement vers l'extérieur, au moins partiellement circulaire, qui interagit avec les côtés avant (28) du segment d'encliquetage (26) de la partie chapeau (6) orientés perpendiculairement au sens de l'écoulement d'entrée (14).

9. Soupape à siège (2) selon l'une des revendications précédentes, **caractérisée en ce que** la partie de base (4) et la partie chapeau (6) présentent des surfaces de contact (36, 34) tournées l'une vers l'autre, qui sont orientées sensiblement perpendiculairement au sens de l'écoulement d'entrée (14) de la soupape à siège (2).

10. Soupape à siège (2) selon les revendications 7 à 9, **caractérisée en ce que** la partie de base (4) présente des logements d'encliquetage pour les segments d'encliquetage (26) de la partie chapeau (6), les logements étant formés par des segments de paroi qui comprennent la surface de contact (36), les surfaces latérales (38, 40) contiguës adaptées à la forme des segments d'encliquetage, ainsi qu'une surface de bride (42) de la bride (44) contiguë, qui est tournée vers les côtés avant (32) du segment d'engrènement (26) orientés perpendiculairement au sens de l'écoulement.

11. Soupape à siège (2) selon l'une des revendications précédentes, **caractérisée en ce que** le décrochement (48) est disposé entre un segment de la partie chapeau côté écoulement d'entrée (46) et un segment de la partie chapeau côté écoulement de sortie (50), et **en ce que** la dimension extérieure du segment de la partie chapeau côté écoulement d'entrée (46) et supérieure à la dimension extérieure du segment de la partie chapeau côté écoulement de sortie (50).

12. Soupape à siège (2) selon l'une des revendications précédentes, **caractérisée en ce que** le décrochement (48) forme au moins sur une partie une surface annulaire qui est orientée perpendiculairement au sens de l'écoulement d'entrée (14) de la soupape à siège (2).

13. Soupape à siège (2) selon l'une des revendications précédentes, **caractérisée en ce que** le corps de soupape (8) est introduit dans un conduit (56) cylindrique ouvert côté avant formé dans la partie chapeau (6).

14. Soupape à siège (2) selon la revendication 9, **caractérisée en ce que** le contour extérieur de la partie de base (4) et de la partie chapeau (6) est cylindrique, au moins dans la zone dans laquelle les surfaces de contact (36, 34) se trouvent l'une contre l'autre.

15. Soupape à siège (2) selon l'une des revendications précédentes, **caractérisée en ce que** sont prévus des éléments de guidage (59) pour le corps de soupape (8) disposés à proximité du siège de soupape (10) dans ou sur la partie de base (4), le long d'un pourtour circonférentiel.

16. Dispositif comprenant une soupape à siège (2) selon l'une des revendications précédentes, et un élément (60) sur lequel ou dans lequel est disposée la soupape à siège (2), la soupape à siège (2) et l'élément (60) étant soudés l'un à l'autre de manière indétachable.

17. Dispositif selon la revendication 16, **caractérisé en ce que** l'élément est un carter, un tube central (60) ou un couvercle, en particulier d'un filtre à huile.

18. Dispositif selon l'une des revendications 16 ou 17, **caractérisé en ce que** l'élément (60) présente un logement dans lequel la soupape à siège (2) peut être placée dans une position lâche de pré-montage.

19. Dispositif selon la revendication 18, **caractérisé en ce que** le logement présente un segment d'appui (74) pour l'appui du collet (18) de la soupape à siège (2).

20. Dispositif selon la revendication 18 ou 19, **caractérisé en ce que** le logement présente un palier (76) qui interagit avec le décrochement (48) de la soupape à siège (2).

21. Dispositif selon la revendication 19 ou 20, **caractérisé en ce que** le segment d'appui (74) et le palier (76) présentent des surfaces perpendiculaires au sens de l'écoulement d'entrée (14) de la soupape à siège (2), qui sont disposées parallèlement aux surfaces de contact (36, 34) de la partie de base (4) et de la partie chapeau (6) de la soupape à siège (2).

22. Dispositif selon la revendication 21, **caractérisé en ce que** la distance (78) entre les surfaces du segment d'appui (47) perpendiculaires au sens de l'écoulement d'entrée (14) de la soupape à siège (2) et le palier (76) est légèrement plus petite que la distance (80) entre la surface (20) du collet (18) opposée au sens de l'écoulement d'entrée (14) de la soupape à siège (2) et le décrochement (48) de la soupape à siège (2).

23. Dispositif selon la revendication 22, **caractérisé en ce que** la distance (78) entre les surfaces du segment d'appui (47) perpendiculaires au sens de l'écoulement d'entrée (14) de la soupape à siège (2) et le palier (76) est légèrement plus grande que la distance (80) entre la surface (20) du collet (18) opposée au sens de l'écoulement d'entrée (14) de la soupape à siège (2) et le décrochement (48) de la soupape à siège (2).
